(19) Europäisches Patentamt
European Patent Office
Office européen des brevets

(11) **EP 4 610 632 A1**

(12) **EUROPEAN PATENT APPLICATION**

(43) Date of publication:
**03.09.2025 Bulletin 2025/36**

(21) Application number: **25157030.5**

(22) Date of filing: **11.02.2025**

(51) International Patent Classification (IPC):
***G01N 21/88*** (2006.01)          ***G01N 21/95*** (2006.01)
***G01N 21/84*** (2006.01)

(52) Cooperative Patent Classification (CPC):
**G01N 21/8806; G01N 21/9515;** G01N 2021/8427;
G01N 2021/8816; G01N 2021/8829;
G01N 2021/8845

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2024 JP 2024028128
28.02.2024 JP 2024028127**

(71) Applicant: **Ricoh Company, Ltd.
Tokyo 143-8555 (JP)**

(72) Inventor: **MASUDA, Koji
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **MEASUREMENT APPARATUS AND MEASUREMENT METHOD**

(57)    A measurement apparatus for measuring a measurement target object conveyed in a conveying direction, the measurement apparatus including an illuminating unit configured to illuminate the measurement target object; and a light receiving unit configured to receive specular reflection light from the measurement target object illuminated by the illuminating unit. The illuminating unit includes a light source and a first diffusion plate, the light source including a plurality of point light sources, a plurality of the light sources are arranged in a predetermined arrangement direction, the plurality of point light sources are arranged in an orthogonal direction that is orthogonal to the predetermined arrangement direction, and when a diffusion angle relative to the predetermined arrangement direction of the first diffusion plate is given as Ax and a diffusion angle relative to the orthogonal direction is given as Ay, a relationship of Ax < Ay is satisfied.

FIG.9

EP 4 610 632 A1

**Description**

BACKGROUND OF THE INVENTION

1. Field of the Invention

The present invention relates to a measurement apparatus and a measurement method.

2. Description of the Related Art

As a measurement target object, for example, an inspection apparatus for inspecting defects on a painted surface of a vehicle body is known. For example, Patent Document 1 discloses an inspection apparatus using a three-dimensional shape measurement method for obtaining an image by projecting, onto an object, pattern light created by synthesizing a plurality of pieces of sinusoidal slit pattern data having different frequency components and color components.

Patent Document 1: Japanese Unexamined Patent Application Publication No. H9-21620

However, the inspection apparatus of Patent Document 1 may not always have sufficient accuracy.

Further, as a measurement target object, for example, a painted surface of a vehicle body, there is a problem that it is difficult to measure the object with high accuracy.

An object of the present invention is to provide a measurement apparatus capable of enhancing the accuracy of measuring a measurement target object, to solve the above problem.

An object of the present invention is to provide a measurement apparatus capable of highly accurate measurement, to solve the above problem.

SUMMARY OF THE INVENTION

According to one aspect of the present invention, there is provided measurement apparatus for measuring a measurement target object conveyed in a conveying direction, the measurement apparatus including an illuminating unit configured to illuminate the measurement target object; and a light receiving unit configured to receive specular reflection light from the measurement target object illuminated by the illuminating unit. The illuminating unit includes a light source and a first diffusion plate, the light source including a plurality of point light sources, a plurality of the light sources are arranged in a predetermined arrangement direction, the plurality of point light sources are arranged in an orthogonal direction that is orthogonal to the predetermined arrangement direction, and when a diffusion angle relative to the predetermined arrangement direction of the first diffusion plate is given as Ax and a diffusion angle relative to the orthogonal direction is given as Ay, a relationship of Ax < Ay is satisfied.

According to one embodiment of the present invention, the accuracy of measuring a measurement target object can be increased.

According to one embodiment of the present invention, a measurement apparatus capable of highly accurate measurement can be provided.

BRIEF DESCRIPTION OF THE DRAWINGS

FIG. 1 is a block diagram of a measurement apparatus according to an embodiment of the present invention;
FIG. 2 is a diagram illustrating an outline of the optical unit of a measurement apparatus according to an embodiment of the present invention;
FIGS. 3A and 3B are diagrams illustrating the relationship between the optical unit in a measurement apparatus according to an embodiment of the present invention and a measurement target object;
FIGS. 4A, 4B, and 4C are optical arrangement diagrams of a measurement apparatus according to a comparative example;
FIGS. 5A, 5B, 5C, and 5D are optical arrangement diagrams of a measurement apparatus according to an embodiment of the present invention;
FIG.6 is a diagram illustrating the arrangement of point light sources in another example of a measurement apparatus according to an embodiment of the present invention;
FIGS. 7A, 7B, 7C, and 7D are diagrams for explaining an illumination pattern formed in a second diffusion plate in a measurement apparatus according to an embodiment of the present invention;
FIGS. 8A and 8B are diagrams for explaining a diffusion angle of a first diffusion plate in a measurement apparatus according to an embodiment of the present invention;
FIG. 9 is a diagram for explaining the relationship between a first diffusion plate and a second diffusion plate in a measurement apparatus according to an embodiment of the present invention;
FIG. 10 is a block diagram illustrating a hardware configuration of a control unit of a measurement apparatus according to an embodiment of the present invention;
FIG. 11 is a block diagram illustrating a functional configuration of a control unit of a measurement apparatus according to an embodiment of the present invention;
FIG. 12 is a flowchart for explaining a measurement method according to an embodiment of the present invention; and
FIG. 13 is a flowchart for explaining a defect detection process performed by a defect detecting unit of a measurement apparatus according to an embodiment of the present invention.

DESCRIPTION OF THE EMBODIMENTS

An embodiment of the invention will be described below with reference to the drawings. In each of the drawings, the same components are denoted by the same reference numerals, and duplicate descriptions may be omitted.

[Embodiment]

<Configuration of measurement apparatus 1>

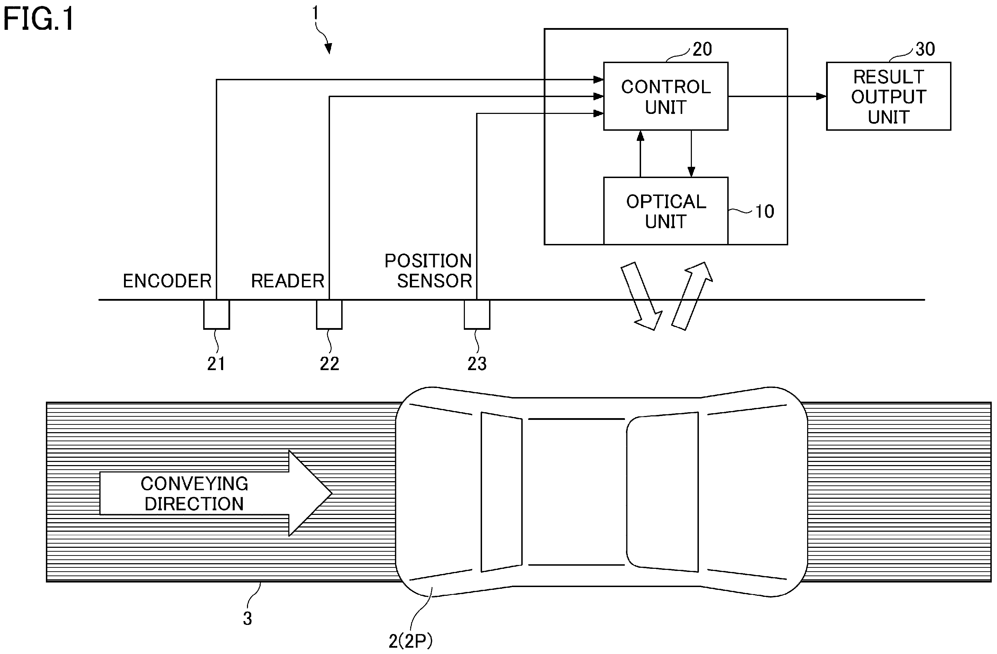

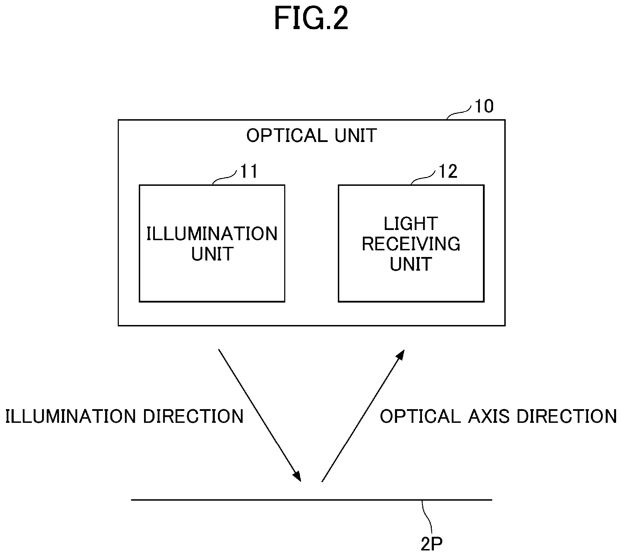

An example of the configuration of a measurement apparatus 1 according to an embodiment of the present invention will be described with reference to FIGS. 1 and 2. FIG. 1 is a configuration diagram of the measurement apparatus 1 according to an embodiment of the present invention. The measurement apparatus 1 measures the state of the measurement target object 2 conveyed in the conveying direction. The state of the measurement target object 2 may be represented by one or more characteristic values based on an image of a surface 2P. The measurement target object 2 is conveyed by a conveying unit 3. The measurement target object 2 is, for example, a painted body of a large automobile, an ordinary automobile, or a small automobile. The measurement target object 2 may be, for example, a surface 2P of the vehicle body, and the surface 2P of the vehicle body may be painted. The measurement target object 2 may be an object other than the vehicle body, and the surface 2P need not be painted.

The measurement apparatus 1 includes at least an optical unit 10. The details of the optical unit 10 will now be described with reference to FIG. 2. FIG. 2 is a diagram illustrating the details of the optical unit 10 according to an embodiment of the present invention. The optical unit 10 includes an illumination unit 11 and a light receiving unit 12. Hereinafter, a component including the illumination unit 11 and the light receiving unit 12 will be referred to as an "optical unit 10".

The optical unit 10 illuminates the measurement target object 2 and receives the specular reflection light from the illuminated measurement target object 2. The surface 2P forms a gentle curved surface. Therefore, the surface 2P is described as a virtual plane parallel to the conveying direction.

The illumination unit 11 illuminates the measurement target object 2. The light receiving unit 12 receives the specular reflection light from the measurement target object 2 illuminated by the illumination unit 11. An example of the light receiving unit 12 is an imaging device such as a camera equipped with an imaging element such as a CCD (Charge Coupled Device) or CMOS (Complementary Metal-Oxide-Semiconductor).

The light receiving unit 12 receives the specular reflection light from the measurement target object 2 illuminated by the illumination unit 11. The light receiving unit 12 may focus on the surface 2P of the measurement target object 2 and receive and measure reflected light from the measurement target object 2 at predetermined time intervals or in response to a trigger signal from the outside. The illumination direction from a light source 13 and the optical axis direction of the light receiving unit 12 are arranged so as to be a specular reflection light with respect to the surface 2P.

In the measurement target object 2, an area to be measured by the measurement apparatus 1 is set in advance. It is not necessary that the entire measurement target object 2 is the measurement area. For example, when the measurement target object 2 is a vehicle body, an area with a large curved surface such as a door knob and the vicinity of the edge of the vehicle body are generally excluded from the measurement area. Therefore, the area that can be measured may be set in advance as the measurement area, and the illumination unit 11 and the light receiving unit 12 may be arranged accordingly.

When the light receiving unit 12 is an imaging device, image information of the measurement target object 2 is generated. The image information may be, for example, a two-dimensional color image. A visible light camera such as an area camera is an example of the light receiving unit 12.

The surface 2P of the measurement target object 2 may be a smooth surface having gloss. The light incident on the surface 2P from the illumination unit 11 is a specular reflection light because the incident angle and the reflection angle are equal. On the other hand, the surface 2P is a collection of a plurality of curved areas having different normal directions and curvatures.

Furthermore, the measurement apparatus 1 includes a control unit 20, a result output unit 30, an encoder 21, a reader 22, and a position sensor 23.

The control unit 20 controls the timing of the operation of the measurement apparatus 1. The control unit 20 is connected to the encoder 21, the reader 22, and the position sensor 23. The encoder 21 monitors the conveyance state such as the conveyance speed of the conveying unit 3. The reader 22 acquires information (unique ID, vehicle type, color, etc.) of the measurement target object 2. The position sensor 23 acquires information on the proximity of the measurement target object 2 to the measurement area or position information of the measurement target object 2 such as presence or absence in the measurement area. The control unit 20 measures the state of the measurement target object 2 based on the specular reflection light from the measurement target object 2 received by the light receiving unit 12, and detects defects.

The result output unit 30 outputs information relating to characteristic values and information on defects at each measurement position of the measurement target object 2 on a monitor, a printer, in the form of electronic data, etc.

The measurement apparatus 1 can provide information useful for identifying the cause of defects in the previous process and for repairing defects in the subsequent process based on the type of defects determined.

When the measurement target object 2 is a painted vehicle body, the measurement apparatus 1 measures the presence or absence of defects on the surfaces 2P of painted surfaces such as doors, the bonnet, the roof, the trunk lid, and the rear bumpers included in the vehicle body. Here, the defects on the surface 2P are, for example, scratches, cracks, unevenness, dirt, poor discoloration, or the like formed on the painted surface. The defects on the painting are, for example, scratches, hedges, pinholes, orange peels, and the like.

In the example illustrated in FIG. 1, the measurement apparatus 1 is arranged only on one side of the conveying unit 3, but it is not limited to this, and the measurement apparatus 1 may be arranged on both sides of the conveying unit 3. When the measurement apparatus 1 is arranged on both sides of the conveying unit 3, the measurement apparatuses 1 may be arranged so as to face each other and sandwich the measurement target object 2, or the measurement apparatuses 1 may be arranged so as to be offset from each other in the conveying direction.

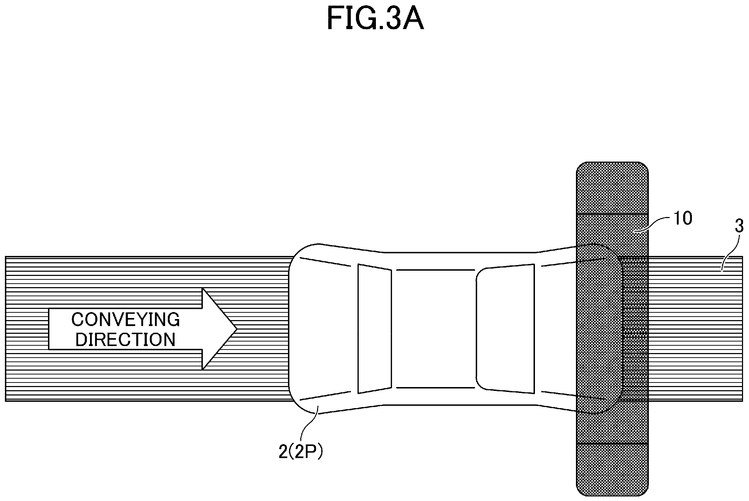

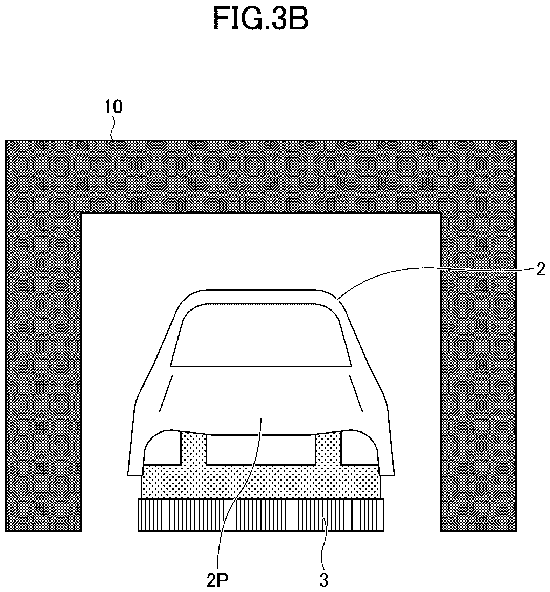

FIGS. 3A and 3B are diagrams illustrating the relationship between the optical unit 10 of the measurement apparatus 1 according to an embodiment of the present invention and the measurement target object 2. FIG. 3A is a plan view and FIG. 3B is a front view. The measurement target object 2 is conveyed in the conveying direction by the conveying unit 3. The optical unit 10 is arranged in a gate shape so as to surround the conveyed measurement target object 2. The measurement target object 2 is conveyed inside the gate-shaped optical unit 10 at a constant speed and is measured. When the measurement target object 2 passes through the gate-shaped optical unit 10, the entire measurement target object 2 is measured.

<History of study until arriving at the measurement apparatus 1 according to the embodiment>

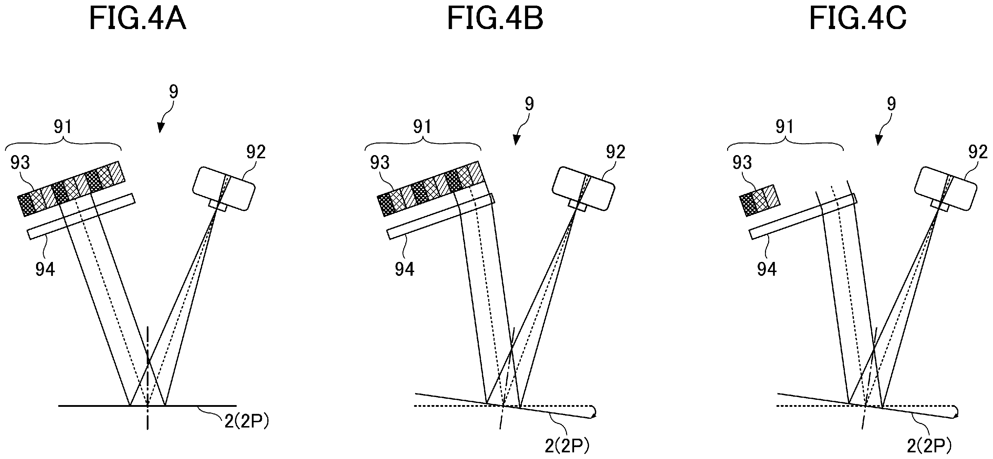

The history of study until arriving at the measurement apparatus 1 according to the embodiment is described below. FIGS. 4A to 4C are optical arrangement diagrams of a measurement apparatus 9 according to a comparative example.

The measurement apparatus 9 according to the comparative example includes a light receiving unit 92 and an illumination unit 91. The illumination unit 91 illuminates the measurement target object 2 with linear light. The light receiving unit 92 receives the specular reflection light from the measurement target object 2 illuminated by the illumination unit 91. The illumination unit 91 includes a plurality of linear light sources 93. The linear light sources 93 are arranged in such an order that a red line light source, a green line light source, and a blue line light source are repeated. The illumination pattern formed in the illuminated measurement target object 2 is a stripe pattern in which bright-dark patterns, in which the brightness of light changes sinusoidally in the predetermined arrangement direction of the linear light sources 93 for each wavelength, are combined. The light receiving unit 92 is composed of a plurality of area cameras and receives specular reflection light from the illuminated measurement target object 2. The diffusion plate 94 is arranged between the linear light source 93 and the measurement target object 2.

FIG. 4A is the measurement apparatus 9 arranged so that the direction of illumination from the linear light source 93 and the direction of the optical axis of the light receiving unit 92 are a specular reflection light with respect to the surface 2P. FIG. 4B illustrates the measurement apparatus 9 when the surface 2P is inclined with respect to FIG. 4A. Although the position of the linear light source 93 required for measurement of the specular reflection light is shifted in the predetermined arrangement direction, measurement is possible.

FIG. 4C is a measurement apparatus 9 in which the linear light source 93 is reduced compared to FIGS. 4A and 4B. FIG. 4C illustrates the measurement apparatus 9 in which the surface 2P is inclined as in FIG. 4B. In the case of FIG. 4C, because the linear light source 93 does not exist at the position required for measurement, the light receiving unit 92 cannot receive the specular reflection light from the measurement target object 2.

The surface 2P includes a plurality of areas in which the normal direction of the surface and the magnitude of the curvature of the surface are different depending on the position of the measurement target object 2 such as when the surface 2P is inclined. When the measurement target object 2 is measured in this way, the number of linear light sources 93 to irradiate the measurement target object 2 needs to be increased because the linear light source 93 does not exist at the position required for measurement, compared with the case where the surface 2P of the measurement target object 2 is not inclined.

Therefore, the measurement apparatus 1 according to this embodiment was made. The optical arrangement of the measurement apparatus 1 according to an embodiment of the present invention will be described below.

<Optical arrangement of the measurement apparatus 1 according to embodiment>

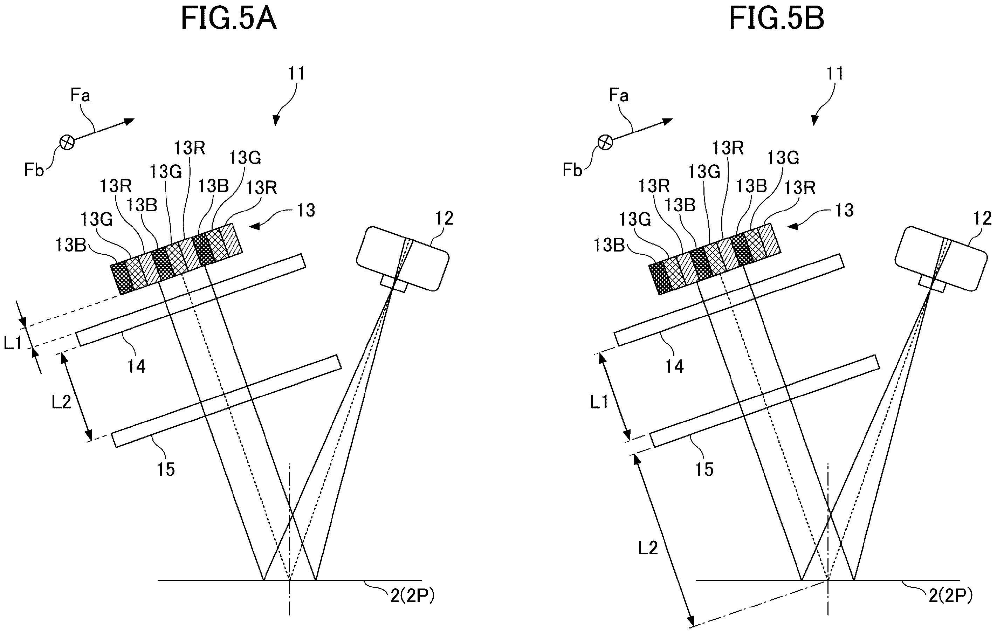

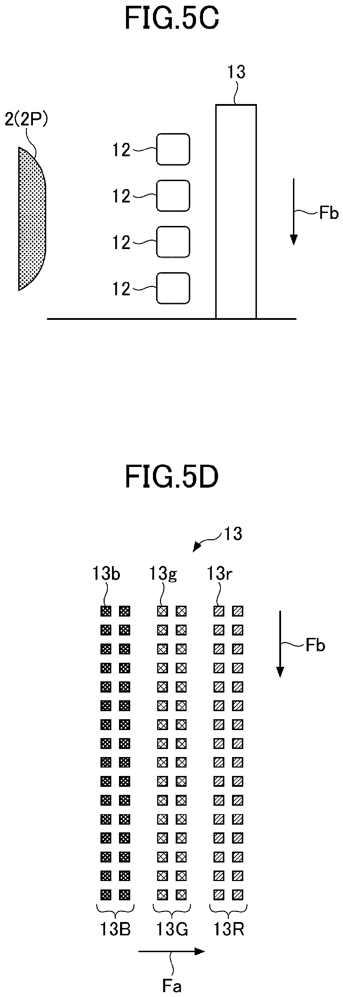

FIGS. 5A to 5D are optical arrangement diagrams of the measurement apparatus 1 according to an embodiment of the present invention. FIGS. 5A and 5B are plan views and FIG. 5C is a front view. FIG. 5D is a diagram illustrating details of the light source 13. FIGS. 5A to 5D illustrate a predetermined arrangement direction Fa and an orthogonal direction Fb. The predetermined arrangement direction Fa indicates a predetermined arrangement direction in which the light sources 13B, 13G, and 13R are arranged. The orthogonal direction Fb indicates an orthogonal direction orthogonal to the predetermined arrangement direction Fa. The same components as those already described are denoted by the same reference numerals, and duplicate descriptions are omitted.

As illustrated in FIG. 5A, the measurement apparatus 1 includes the illumination unit 11 and a light receiving unit 12, and the illumination unit 11 includes a light source 13, a first diffusion plate 14, and a second diffusion plate 15.

The light source 13 includes a plurality of light sources 13B, 13G, and 13R. The light sources 13B, 13G, and 13R emit light at different wavelengths. For example, the light sources 13B, 13G, and 13R may emit light in blue, green, and red, respectively. The light sources 13B, 13G, and 13R are arranged along the predetermined arrangement direction Fa. The predetermined arrangement direction Fa has a predetermined angle with respect to the horizontal direction of the surface of the vehicle body.

FIG. 5C illustrates a light receiving unit 12 and a light source 13 with respect to the surface 2P of the measurement target object 2. The light source 13 has a long directivity in the orthogonal direction Fb. A plurality of light receiving units 12 are provided in the orthogonal direction Fb.

In the light source 13, point light sources (not illustrated) emitting light of the same wavelength are arranged in the orthogonal direction Fb. Therefore, linear light sources emitting light of different wavelengths may be arranged in a predetermined order in the predetermined arrangement direction Fa.

As illustrated in FIG. 5D, the light source 13 includes light sources 13B, 13G, and 13R. In each of the light sources 13B, 13G, and 13R, a plurality of point light sources 13b, a plurality of point light sources 13g, and a plurality of point light sources 13r are arranged in the orthogonal direction Fb, respectively. In FIGS. 5A to 5D, the light sources are arranged in the order of blue, green, and red as a predetermined order, but the order may be different from this order, and the order may include colors other than blue, green, and red.

Note that red, green, and blue are at least necessary types in the phase shift operation to be performed in the defect detection, and are general-purpose because they are the three primary colors of visible light.

In FIG. 5D, the blue point light source 13b, the green point light sources 13g, and the red point light sources 13r are respectively arranged in two rows in the orthogonal direction Fb, but they are not limited to two rows, and may be one row or a plurality of rows such as three rows. The blue point light sources 13b, the green point light source 13g, and the red point light sources 13r are arranged in the orthogonal direction Fb at a pitch of, for example, several mm to several tens of mm. With such arrangement, the light source 13 is used as an object including linear light sources of a plurality of colors.

Note that the numbers of blue point light sources 13b, green point light sources 13g, and red point light sources 13r are not necessarily the same, but can be changed according to the brightness of light emitted, the spectral sensitivity of the light receiving unit 12, and the like.

The point light sources may include lens members that guide the optical path of the emitted light to the measurement target object 2. The lens members are provided, for example, on the chips of each of the point light sources. By providing the lens members, the divergence angle of the light emitted from the point light sources can be reduced, and the directivity is enhanced. Therefore, a high-output illumination pattern can be formed on the second diffusion plate 15. Furthermore, when forming a sinusoidal illumination pattern in the predetermined arrangement direction Fa and a uniform illumination pattern in the orthogonal direction Fb, the degree of freedom of the divergence angle of the light emitted from the point light sources increases.

The point light sources may be LED (Light Emitting Diode) elements, organic EL (Electro Luminescence) elements, or laser elements. Further, in order to form a high-brightness illumination pattern on the second diffusion plate 15, an optical element may be additionally provided in the illumination unit 11. For example, an optical element may be inserted between the point light sources and the first diffusion plate 14, or an optical element may be inserted in another area.

The first diffusion plate 14 is arranged between the light sources 13 and the measurement target object 2. The second diffusion plate 15 is arranged between the first diffusion plate 14 and the measurement target object 2. The second diffusion plate 15 forms an illumination pattern of light for illuminating the measurement target object 2. The formed illumination pattern can be used as a secondary light source for the measurement target object 2.

The light source 13, the first diffusion plate 14, and the second diffusion plate 15 are arranged in parallel with each other. That is, the predetermined arrangement direction Fa of the plurality of light sources 13B, 13G, and 13R and the first diffusion plate 14 and the second diffusion plate 15 are arranged in parallel with each other. Further, the length of the first diffusion plate 14 and the second diffusion plate 15 in the predetermined arrangement direction Fa is preferably equal, and is preferably longer than the length of the light source 13.

FIG. 5A illustrates distances L1 and L2. The distance L1 indicates the distance between the light source 13 and the first diffusion plate 14, and L2 indicates the distance between the first diffusion plate 14 and the second diffusion plate 15. FIG. 5B illustrates distances L1 and L2 in another example. The distance L1 indicates a distance between the first diffusion plate 14 and the second diffusion plate 15, and the distance L2 indicates a distance between the second diffusion plate 15 and the measurement target object 2. In order to equalize the brightness distribution in the orthogonal direction Fb of the illumination pattern formed on the second diffusion plate 15, it is preferable to satisfy the relation L1 < L2.

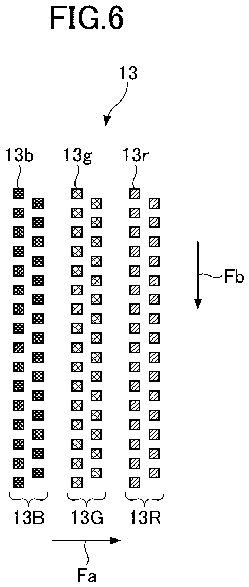

FIG. 6 is a diagram illustrating the arrangement of the point light sources 13b, 13g, 13r of another example of the measurement apparatus 1 according to an embodiment of the present invention. In FIG. 6, the same components as those already described are denoted by the same reference numerals, and duplicate descriptions are omitted.

In FIG. 6, unlike FIG. 5D, the plurality of blue point light sources 13b, the plurality of green point light sources 13g, and the plurality of red point light sources 13r are arranged in a staggered manner with respect to the orthogonal direction Fb.

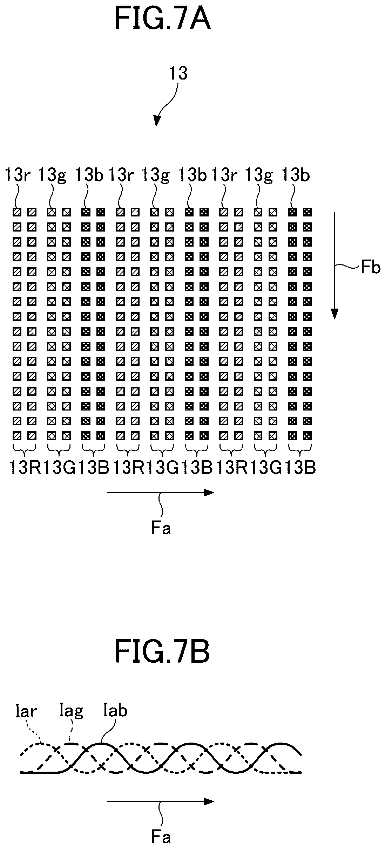

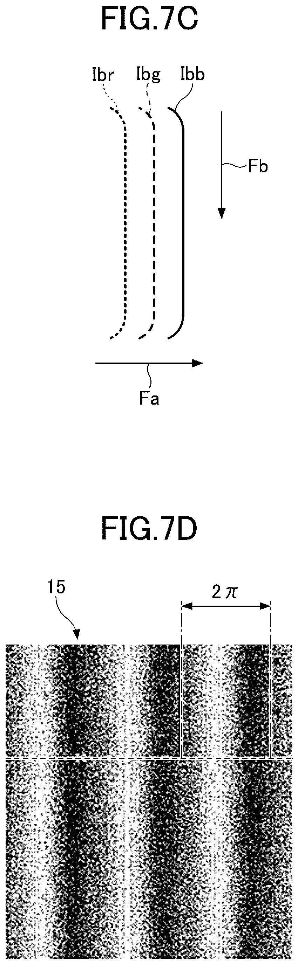

FIGS. 7A to 7D are diagrams for explaining an illumination pattern formed on the second diffusion plate 15 in the measurement apparatus 1 according to an embodiment of the present invention. FIG. 7A illustrates an arrangement of the light source 13, FIG. 7B illustrates a distribution of brightness of light in the predetermined arrangement direction Fa, FIG. 7C illustrates a distribution of brightness of light in the orthogonal direction Fb, and FIG. 7D illustrates an illumination pattern formed on the second diffusion plate 15. The same components as those already described are denoted by the same reference numerals, and duplicate explanations are omitted.

As illustrated in FIG. 7A, in the plurality of light sources 13, a plurality of light sources are arranged repeating the order of the light source 13R, the light source 13G, and the light source 13B in the predetermined arrangement direction Fa. Each light source 13R includes a plurality of red point light sources 13r, each light source 13G includes a plurality of light sources 13g, and each light source 13B includes a plurality of blue point light sources 13b.

FIG. 7B illustrates brightness Iar, Iag, and Iab. The brightness Iar, Iag, and Iab indicate the brightness of the light of the red light sources 13R, the green light sources 13G, and the blue light sources 13B in the predetermined arrangement direction Fa, respectively. In order to calculate the phase information by performing the phase shift operation performed at the time of defect detection, it is preferable that the distribution of the brightness of the respective lights be sinusoidal, but a distribution close to sinusoidal may be used.

FIG. 7C illustrates brightness Ibr, Ibg, and Ibb. The brightness Ibr, Ibg, and Ibb indicate the brightness of the light of the red light sources 13R, the green light sources 13G, and the blue light sources 13B in the orthogonal direction Fb, respectively. In order to use the light source 13 as a linear light source, it is preferable that the brightness distribution of each light is uniform.

FIG. 7D illustrates the brightness distribution of each red-green-blue color as an illumination pattern formed on the second diffusion plate 15. The sine waves in the predetermined arrangement direction Fa corresponding to the red-green-blue colors overlap each other with a phase difference of $2\pi/3$ (rad). In order to calculate the accurate phase information by the phase shift operation performed at the time of defect detection, it is preferable that the illumination pattern is a stripe pattern in which bright-dark patterns, in which the brightness of the light changes sinusoidally in the predetermined arrangement direction Fa for each wavelength, are combined.

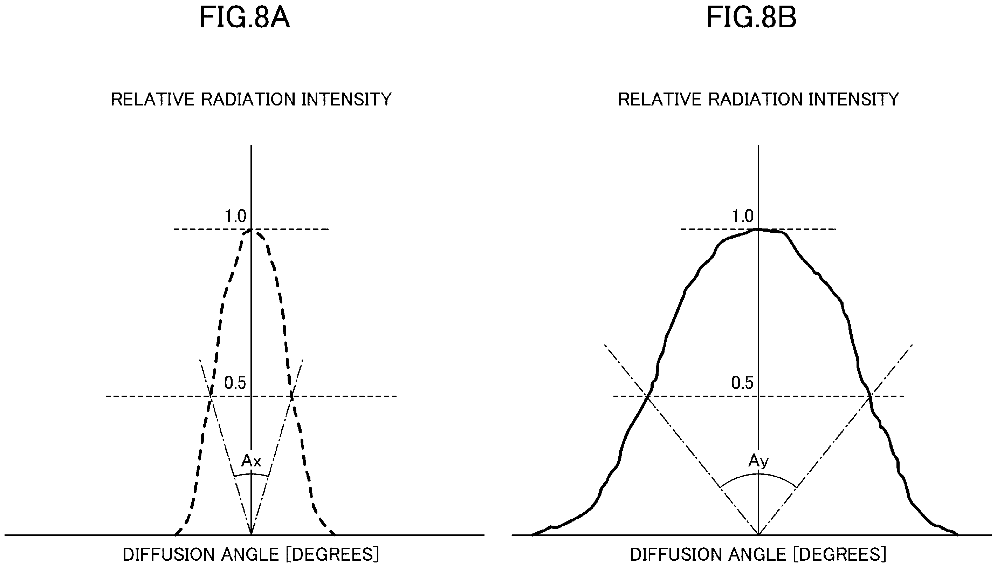

FIGS. 8A and 8B are diagrams for explaining the diffusion angle of the first diffusion plate 14 in the measurement apparatus according to an embodiment of the present invention. The notation of Ax is the diffusion angle in the predetermined arrangement direction Fa of the first diffusion plate 14, and the notation of Ay is the diffusion angle in the orthogonal direction Fb. FIG. 8A illustrates the relative radiation intensity of the diffusion angle Ax in the predetermined arrangement direction Fa, and FIG. 8B illustrates the relative radiation intensity of the diffusion angle Ay in the orthogonal direction Fb. In FIGS. 8A and 8B, the maximum value of the relative radiation intensity is 1.

As for the light from the light source 13, the light beam radiated from the light source 13 is also diffused in an angular direction wider than the full-angle half-maximum, but the radiation intensity is low. Therefore, the diffusion angle Ax of the predetermined arrangement direction Fa and the diffusion angle Ay of the orthogonal direction Fb are defined as full-angle, in which the radiation intensity is 1/2 of the peak radiation intensity, using full-angle half-maximum. By defining the diffusion angle Ax and the diffusion angle Ay in this way, it is possible to ensure a radiation intensity that does not affect the detection of defects by a defect detecting unit 24.

When a plurality of point light sources are arranged in the orthogonal direction Fb, the diffusion angle Ay of the orthogonal direction Fb of the first diffusion plate 14 needs to be large in order to eliminate ripples and make the brightness uniform. When a plurality of point light sources are arranged in the predetermined arrangement direction Fa, in order to make the brightness sinusoidal, the light emitted from the point light sources is diffused so that the brightness is not uniform. Therefore, it is preferable that the diffusion angle Ax of the predetermined arrangement direction Fa of the first diffusion plate 14 is smaller than Ay. That is, in the first diffusion plate 14, the diffusion angle Ax of the predetermined arrangement direction Fa and the diffusion angle Ay of the orthogonal direction Fb preferably satisfy the relationship Ax < Ay.

In order to form such an illumination pattern, it is preferable to appropriately set the distance L1, the distance L2, and the diffusion angle Ax of the predetermined arrangement direction Fa of the first diffusion plate 14.

Here, if the distance L1, the distance L2, and the diffusion angle Ax of the predetermined arrangement direction Fa of the first diffusion plate 14 are preferentially set so that the illumination pattern of the predetermined arrangement direction Fa is sinusoidal, the illumination pattern in the orthogonal direction Fb may become uneven. In this case, by further increasing the diffusion angle Ay of the orthogonal direction Fb of the first diffusion plate 14, the illumination pattern in the orthogonal direction Fb may become uniform.

Note that the first diffusion plate 14 is an anisotropic diffusion plate in which the diffusion angle Ax of the predetermined arrangement direction Fa and the diffusion angle Ay of the orthogonal direction Fb are different, but the second diffusion plate 15 may be isotropic or anisotropic.

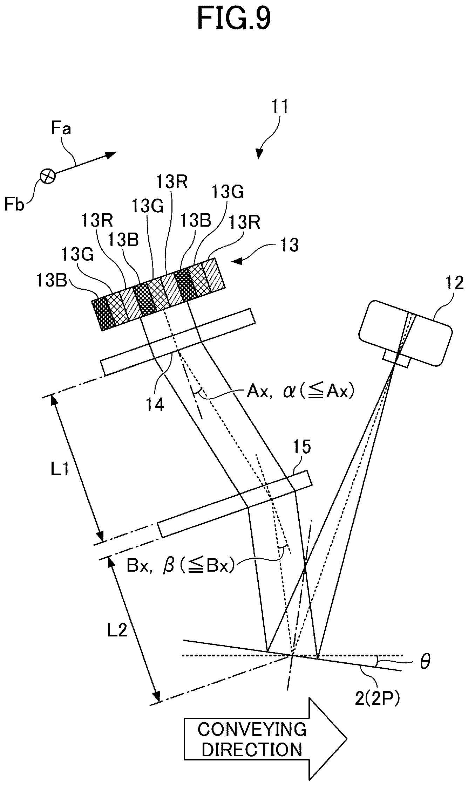

FIG. 9 is a diagram for explaining the relationship between the first diffusion plate 14 and the second diffusion plate 15 in the measurement apparatus 1 according to an embodiment of the present invention. The notation of $\theta$ in the figure is the angle of the surface 2P of the measurement target object 2 with respect to the conveying direction. The notation of $\theta$max is the maximum value of the angle $\theta$ of the surface 2P at which the light receiving unit 12 can receive the specular reflection light from the measurement target object 2.

The diffusion angle relative to the predetermined arrangement direction Fa of the first diffusion plate 14 is Ax, and the diffusion angle relative to the orthogonal direction Fb is Ay. The diffusion angle relative to the predetermined arrangement direction Fa of the second diffusion plate 15 is Bx, and the diffusion angle relative to the orthogonal direction Fb is By. The notation of $\alpha$ indicates the angle between the optical axis and the light flux in the first diffusion plate 14, and the notation of $\beta$ indicates the angle between the optical axis and the light flux in the second diffusion plate 15. The angles $\alpha$ and $\beta$ satisfy the relationship $\alpha \leq Ax$ and $\beta \leq Bx$, respectively.

In order for the light receiving unit 12 to receive the specular reflection light from the measurement target object 2 illuminated by the light source 13, the diffusion angle Bx of the second diffusion plate 15 and the angle $\theta$max need to satisfy the relationship $Bx \geq 2\theta$max. In order to increase the illuminance of the surface 2P, it is preferable that $Bx = 2\theta$max. Note that $\theta$max is, for example, approximately 15 to 25 degrees, and depends on the type of the measurement target object 2.

When a plurality of point light sources (not illustrated) are arranged in the orthogonal direction Fb, the diffusion angle Ay of the first diffusion plate 14 in the orthogonal direction Fb needs to be large in order to eliminate ripples and make the luminance uniform.

When a plurality of point light sources are arranged in the predetermined arrangement direction Fa, in order to make the brightness sinusoidal, the light emitted from the point light sources is diffused so that the brightness is not uniform. Therefore, it is preferable that the diffusion angle Ax of the predetermined arrangement direction Fa of the first diffusion plate 14 is smaller than Ay.

That is, in the first diffusion plate 14, the diffusion angle Ax of the predetermined arrangement direction Fa and the diffusion angle Ay of the orthogonal direction Fb preferably satisfy the relationship Ax < Ay.

The relationship between the diffusion angles in the predetermined arrangement direction Fa and the orthogonal direction Fb of the second diffusion plate 15 will be described. In order to widen the measurable range of the measurement target object 2, it is preferable that the diffusion angle Bx in the predetermined arrangement direction Fa of the second diffusion plate 15 is large. In order to illuminate the measurement target object 2 with high brightness, it is preferable that the diffusion angle By in the orthogonal direction Fb of the second diffusion plate 15 is small.

That is, in the second diffusion plate 15, it is preferable that the diffusion angle Bx in the predetermined arrangement direction Fa and the diffusion angle By in the orthogonal direction Fb satisfy the relationship Bx > By.

The first diffusion plate 14 is an optically anisotropic diffusion plate in which the diffusion angle Ax in the predetermined arrangement direction Fa and the diffusion angle Ay in the orthogonal direction Fb are different. The second diffusion plate 15 may be optically isotropic or anisotropic, but the optically isotropic one has higher workability.

Because the angle $\theta$ takes a different value depending on the position of the measurement target object 2, it is preferable that the measurable range is wide and that the brightness of the light illuminating the measurement target object 2 is high. In order to widen the measurable range, it is preferable that the diffusion angle Bx in the predetermined arrangement direction Fa of the second diffusion plate 15 is large. In addition, in order to increase the brightness of the light which irradiates the measurement target object 2, it is preferable that the diffusion angle Ax in the predetermined arrangement direction Fa of the first diffusion plate 14 is small. From these conditions, the diffusion angles Ax and Bx preferably satisfy $Ax \leq Bx$.

On the other hand, in order to widen the measurable range, it is preferable that the diffusion angle Bx in the orthogonal direction of the second diffusion plate 15 is small. In addition, in order to increase the brightness of the light which illuminates the measurement target object 2, it is preferable that the diffusion angle By in the orthogonal direction Fb of the second diffusion plate 15 is small.

From the above, it is preferable that the diffusion angles Ax and Ay of the first diffusion plate 14 and the diffusion angles Bx and By of the second diffusion plate 15 satisfy the relationship of $Ax \leq Bx$ and $Ay \geq By$, respectively. By satisfying these relationships, the first diffusion plate 14 and the second diffusion plate 15 can widen the measurable range in the measurement target object 2 in the predetermined arrangement direction Fa and the orthogonal direction Fb, and share the functions for illuminating the measurement target object 2 with high brightness.

When the angle of the surface 2P of the measurement target object 2 with respect to the conveying direction is $\theta$, the condition under which the specular reflection light from the measurement target object 2 can be received is as follows:

$$L1 \times \alpha \approx L2 \times \beta \quad ... \quad (1)$$

Because equation (1) is also expressed as $\alpha/\beta \approx L2/L1$, it is preferable that $\alpha \le \beta$ is satisfied in consideration of the condition that $Ax \le Bx$, and thus, it is preferable that equation (2) below be satisfied. By satisfying equation (2), the brightness distribution in the orthogonal direction Fb of the illumination pattern formed on the second diffusion plate 15 can be made uniform.

$$L1 > L2 \quad ... \quad (2)$$

Note that the light beam radiated from the light source 13 is also diffused in the angular direction wider than the full-angle half-maximum, but the radiation intensity thereof is small. Therefore, the diffusion angle Ax of the first diffusion plate 14 and the diffusion angle Bx of the second diffusion plate 15 use full-angle half-maximum, and are defined as full-angle whose radiation intensity is 1/2 of the peak radiation intensity. By defining the diffusion angles Ax and Bx in this way, the light is received by the light receiving unit 12, and the radiation intensity can be secured to a degree that does not affect the detection of defects by the defect detecting unit 24.

<Hardware configuration>

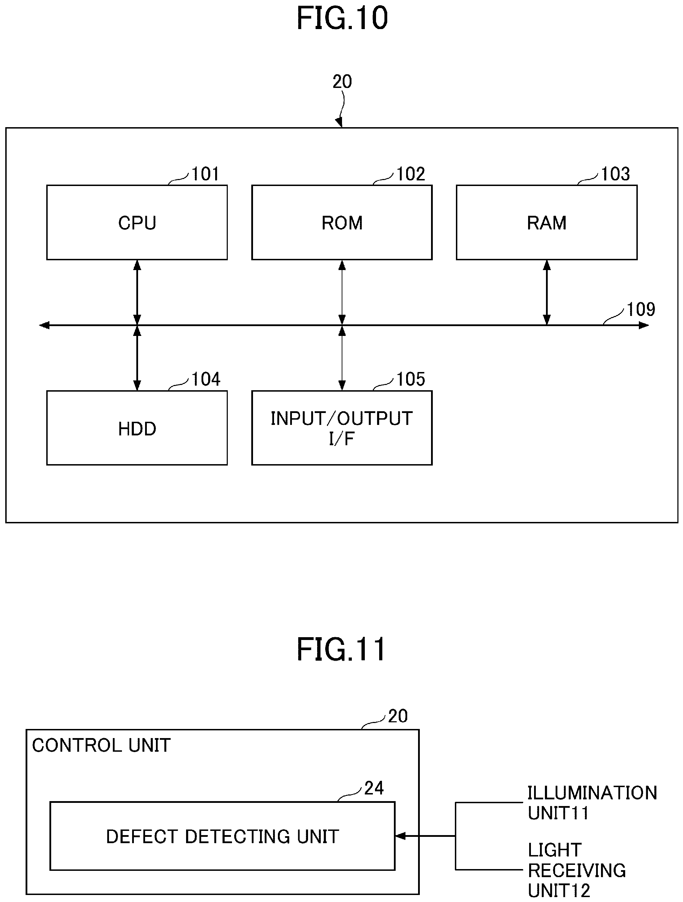

FIG. 10 is a block diagram illustrating the hardware configuration of the control unit 20 of the measurement apparatus 1 according to an embodiment of the present invention. The control unit 20 includes a CPU (Central Processing Unit) 101, a ROM (Read Only Memory) 102, a RAM (Random Access Memory) 103, a hard disk drive (HDD) 104, and an input/output interface (I/F) 105. These are electrically connected to each other via a bus 109.

The CPU 101 controls the operation of the control unit 20. The ROM 102 stores programs and the like executed by the CPU 101. The RAM 103 is used as a work area of the CPU 101. The HDD 104 stores various kinds of data such as programs and the like. The I/O I/F 105 is an interface for inputting and outputting various signals and data with an external device.

Some or all of the functions of the CPU 101 may be implemented by an electronic circuit such as an ASIC (Application Specific Integrated Circuit) or a FPGA (Field-Programmable Gate Array).

FIG. 11 is a block diagram illustrating the functional configuration of the control unit 20 of the measurement apparatus 1 according to an embodiment of the present invention. The control unit 20 includes a defect detecting unit 24. The control unit 20 controls the timing of the operation of the illumination unit 11 and the light receiving unit 12.

The defect detecting unit 24 detects a defect by measuring the state of the measurement target object 2 based on the specular reflection light from the measurement target object 2 received by the light receiving unit 12. More specifically, the defect detecting unit 24 generates image information based on the specular reflection light from the measurement target object 2 received by the light receiving unit 12, calculates a characteristic value based on the generated image information, and measures the state of the measurement target object 2 according to the calculated characteristic value.

More specifically, the defect detecting unit 24 generates image information based on the specular reflection light from the measurement target object 2 received by the light receiving unit 12, and calculates phase information based on the distribution of brightness of light included in the image information. The defect detecting unit 24 calculates a characteristic value based on at least the phase information, and detects a defect by measuring the state of the measurement target object 2 according to the characteristic value. The defect detecting unit 24 may calculate one or more characteristic values based on a predetermined algorithm. The defect detecting unit 24 may calculate a characteristic value based on brightness information, phase information, color information, and information combining these plural pieces of information. The characteristic value may be, for example, a magnitude such as a peak value of a signal level in an area that is a defect candidate, a change amount such as a slope of a signal, or the size of the area.

The defect detecting unit 24 detects a defect based on the calculated characteristic value and a defect determination criterion. The defect detecting unit 24 detects a defect by using a defect inspection algorithm based on the characteristic value, the state of the surface 2P, and the inspection criterion set for each of various types of defects.

<Measurement method>

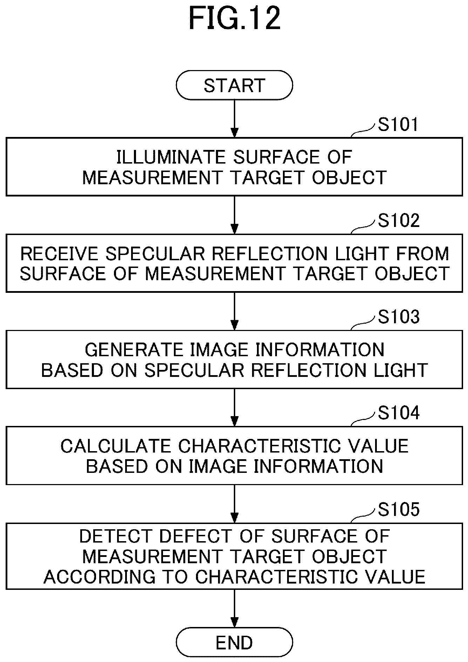

FIG. 12 is a flowchart for explaining a measurement method according to an embodiment of the present invention. The measurement method is executed in the measurement apparatus 1.

First, the illumination unit 11 of the measurement apparatus 1 illuminates the measurement target object 2 (step S101). Subsequently, the light receiving unit 12 of the measurement apparatus 1 receives the specular reflection light from the measurement target object 2 illuminated by the illumination unit 11 (step S102).

The defect detecting unit 24 generates image information based on the specular reflection light from the measurement target object 2 received by the light receiving unit 12 (step S103). When there are multiple light receiving units 12, image information of multiple areas of the measurement target object 2 may be generated.

The defect detecting unit 24 calculates a characteristic value based on the generated image information (step S104). The defect detecting unit 24 detects a defect of the measurement target object 2 according to the calculated characteristic value (step S105).

The measurement method according to one embodiment of the present invention is implemented by these steps. However, the measurement method according to an embodiment of the present invention may suitably include other steps depending on the measurement conditions, the measurement environment, etc.

<Processing performed by the defect detecting unit 24>

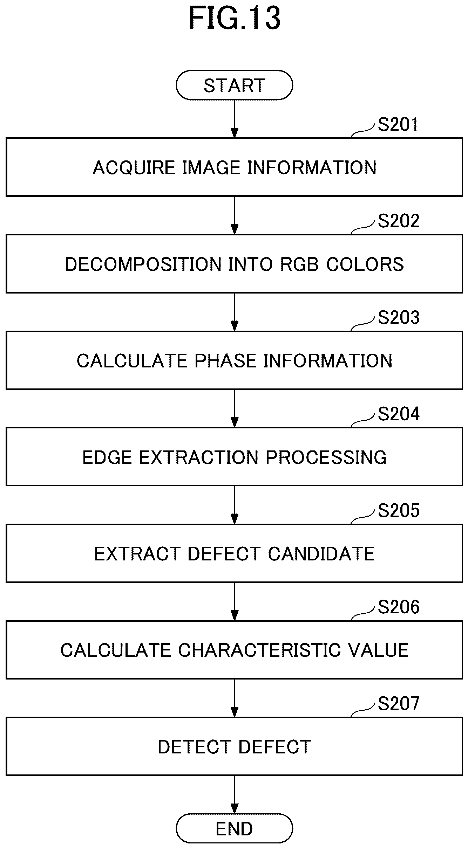

FIG. 13 is a flowchart for explaining the defect detection processing performed by the defect detecting unit 24 of the measurement apparatus 1 according to an embodiment of the present invention. Here, it is assumed that the light source 13 uses three colors that are red, green, and blue.

The processing performed by the defect detecting unit 24 can be roughly divided into two categories: pre-processing for emphasizing the defect of the measurement target object 2 and post-processing for detecting the defect based on the image obtained in the pre-processing. In FIG. 13, pre-processing corresponds to steps S201 to S205, and post-processing corresponds to steps S206 and S207.

First, the light receiving unit 12 receives the specular reflection light from the measurement target object 2 and acquires image information (step S201). This image information is used for defect detection in the defect detecting unit 24. At this time, the light receiving unit 12 may store the acquired image information in the HDD 104 or the like of the measurement apparatus 1.

Next, the defect detecting unit 24 decomposes the image information of the measurement target object 2 acquired in step S201 into RGB colors (step S202). Specifically, the R signal, which is a red signal, the G signal, which is a green signal, and the B signal, which is a blue signal, are extracted from the image information. Because the spectral sensitivity curve of the light receiving unit 12 generally has an overlap of the R signal, the G signal, and the B signal, the signal of each color simply decomposed includes crosstalk. The defect detecting unit 24 performs a correction process referred to as crosstalk correction to extract the R signal, the G signal, and the B signal, which do not include crosstalk.

The defect detecting unit 24 calculates phase information based on the image information acquired in step S201 (step S203). Specifically, the smoothing process is performed for each signal of the RGB colors resulting from the decomposition in step S202 based on the brightness distribution of the light included in the image information. In the smoothing process, a known averaging filter or a bilateral filter that preserves edges is used. Then, the defect detecting unit 24 calculates phase information by performing phase shift calculation using each smoothed signal. As a result, a two-dimensional phase image is obtained. In order for the defect detecting unit 24 to calculate phase information by performing phase shift calculation, it is preferable that the brightness distribution of each light is sinusoidal, but the brightness distribution of each light is sufficient as long as it is close to sinusoidal.

Subsequently, the defect detecting unit 24 performs edge extraction processing based on the phase information calculated in step S203 (step S204). Specifically, edge extraction processing is performed on the two-dimensional phase image, and a known differential filter such as a Sobel filter, a Laplacian filter, and a second differential filter such as a LoG (Laplacian of Gaussian) filter are used.

The defect detecting unit 24 creates a two-dimensional defect emphasis image in which defects of the measurement target object 2 are emphasized by performing the pre-processing of steps S201 to S204. In the following post-processing, the defect detecting unit 24 detects defects based on the defect emphasis image. The defect emphasis image is an image based on phase information, and at least one characteristic value is an image based on phase information.

First, the defect detecting unit 24 extracts an area as a defect candidate from the two-dimensional defect emphasis image (step S205). The extraction process extracts an area as a defect candidate by combining binarization processing, shrinkage/expansion processing, and the like. At this time, an area as a defect candidate may be extracted based on an area of the measurement target object 2 that does not have a defect.

Next, the defect detecting unit 24 calculates a characteristic value based on at least phase information for an area as a defect candidate in the measurement target object 2 (step S206). The defect detecting unit 24 may calculate one or more characteristic values based on a predetermined algorithm. The defect detecting unit 24 may calculate a characteristic value based on brightness information, phase information, color information, and a combination of these pieces of information. The characteristic value is, for example, the magnitude of the signal level of the area as a defect candidate (e.g., peak value), the amount of change in the signal (e.g., inclination), and the size of the area.

The defect detecting unit 24 detects a defect in the measurement target object 2 according to the characteristic value calculated in step S206 (step S207). In detecting a defect, the presence or absence of a defect may be determined by cross-checking the characteristic value with the defect determination criterion.

Note that the characteristic value is not limited to one. The defect detecting unit 24 calculates a plurality of characteristic values and cross-checks each characteristic value with the defect determination criterion to comprehensively detect a defect.

Further, the characteristic value may be calculated from image information acquired by the light receiving unit 12, the brightness based on the RGB color resulting from the decomposition, etc., or from a combination of these pieces of information and phase information. For example, the defect detecting unit 24 may calculate a characteristic value based on the phase information and a characteristic value based on the brightness to detect a defect. Because there are many types of defects, characteristic values corresponding to the characteristics of the defects are required.

<Functional effects>

According to the measurement apparatus 1 according to the present embodiment, the first diffusion plate 14 is arranged between the light source 13 and the measurement target object 2, and the second diffusion plate 15 is arranged between the first diffusion plate 14 and the measurement target object 2. The diffusion angle Ax in the predetermined arrangement direction Fa and the diffusion angle Ay in the orthogonal direction Fb satisfy the relationship Ax < Ay, and an illumination pattern which is a stripe pattern, in which bright-dark patterns in which the brightness of light changes sinusoidally in the predetermined arrangement direction Fa for each wavelength are combined, is formed on the second diffusion plate 15. The second diffusion plate 15 serves as a secondary light source and illuminates the measurement target object 2.

The defect detecting unit 24 generates image information based on the specular reflection light from the measurement target object 2 received by the light receiving unit 12, and calculates phase information based on the distribution of the brightness of light included in the image information. The defect detecting unit 24 calculates phase information by performing phase shift calculation by using the stripe pattern in which bright-dark patterns changing sinusoidally are combined. The defect detecting unit 24 calculates a characteristic value based on the phase information, measures the state of the measurement target object 2 according to the characteristic value, and detects a defect. Therefore, the accuracy of measuring the state of the measurement target object 2 can be increased.

According to the measurement apparatus 1 according to the present embodiment, the first diffusion plate 14 and the second diffusion plate 15 for diffusing a light flux in the predetermined arrangement direction Fa of the light source 13 are arranged between the light source 13 and the measurement target object 2. With this configuration, even when the surface 2P is inclined, the light receiving unit 12 can easily receive the specular reflection light from the measurement target object 2.

More specifically, by increasing the diffusion angle Bx in the predetermined arrangement direction Fa of the second diffusion plate 15, the measurable range becomes wider, and by decreasing the diffusion angle Ax in the predetermined arrangement direction Fa of the first diffusion plate 14, the brightness of the light radiated to the measurement target object 2 can be increased. That is, by satisfying the relationship Ax ≤ Bx between the diffusion angles Ax and Bx, the measurement target object 2 can be measured even if the number of linear light sources included in the light source 13 is reduced.

The measurement apparatus and the measurement method are not limited to the specific embodiments described in the detailed description, and variations and modifications may be made without departing from the scope of the present invention.

The following are examples of aspects of the present invention.

    <1> A measurement apparatus for measuring a measurement target object conveyed in a conveying direction, the measurement apparatus including:

        an illuminating unit configured to illuminate the measurement target object; and
        a light receiving unit configured to receive specular reflection light from the measurement target object illuminated by the illuminating unit, wherein
        the illuminating unit includes a light source and a first diffusion plate, the light source including a plurality of point light sources,
        a plurality of the light sources are arranged in a predetermined arrangement direction,
        the plurality of point light sources are arranged in an orthogonal direction that is orthogonal to the predetermined arrangement direction, and
        when a diffusion angle relative to the predetermined arrangement direction of the first diffusion plate is given as Ax and a diffusion angle relative to the orthogonal direction is given as Ay, a relationship of Ax < Ay is satisfied.

    <2> The measurement apparatus according to <1>, wherein the plurality of point light sources emit light of different wavelengths.

    <3> The measurement apparatus according to <1> or <2>, wherein the first diffusion plate is arranged between the light source and the measurement target object.

    <4> The measurement apparatus according to any one of <1> to <3>, further including:
    a second diffusion plate between the first diffusion plate and the measurement target object.

    <5> The measurement apparatus according to <4>, wherein the second diffusion plate has an illumination pattern of light illuminating the measurement target object.

    <6> The measurement apparatus according to <4> or <5>, wherein when a distance between the light source and the first diffusion plate is given as L1 and a distance between the first diffusion plate and the second diffusion plate is given as L2, a relationship of L1 < L2 is satisfied.

    <7> The measurement apparatus according to <5> or <6>, wherein the illumination pattern formed on the second diffusion plate is a stripe pattern in which bright-dark patterns, in which a brightness of light changes sinusoidally in the predetermined arrangement direction for each wavelength, are combined.

<8> The measurement apparatus according to any one of <1> to <7>, further including:
a defect detecting unit configured to detect a defect of the measurement target object based on the specular reflection light from the measurement target object received by the light receiving unit.

<9> The measurement apparatus according to any one of <1> to <8>, wherein the light source includes the plurality of point light sources emitting red light, the plurality of point light sources emitting green light, and the plurality of point light sources emitting blue light.

<10> The measurement apparatus according to any one of <1> to <9>, wherein the plurality of point light sources include a lens member configured to guide an optical path of emitted light to the measurement target object.

<11> The measurement apparatus according to any one of <1> to <10>, wherein the plurality of point light sources are Light Emitting Diode (LED) elements.

<12> The measurement apparatus according to any one of <1> to <11>, wherein the measurement target object is a vehicle body.

<13> A measurement method executed by the measurement apparatus according to any one of <1> to <12>, the measurement method including:

illuminating the measurement target object with light including a plurality of colors; and
receiving the specular reflection light from the illuminated measurement target object.

<14> A measurement apparatus for measuring a measurement target object conveyed in a conveying direction, the measurement apparatus including:

an illuminating unit configured to illuminate the measurement target object; and
a light receiving unit configured to receive specular reflection light from the measurement target object illuminated by the illuminating unit, wherein
the illuminating unit includes a light source, a first diffusion plate, and a second diffusion plate,
a plurality of the light sources are arranged in a predetermined arrangement direction, and
when a diffusion angle relative to the predetermined arrangement direction of the first diffusion plate is given as Ax and a diffusion angle relative to the predetermined arrangement direction of the second diffusion plate is given as Bx, a relationship of Ax ≤ Bx is satisfied.

<15> The measurement apparatus according to <14>, wherein the light source includes a plurality of point light sources.

<16> The measurement apparatus according to <15>, wherein the plurality of point light sources emit light of different wavelengths.

<17> The measurement apparatus according to any one of <14> to <16>, wherein the first diffusion plate is arranged between the light source and the measurement target object.

<18> The measurement apparatus according to any one of <14> to <17>, wherein the second diffusion plate is arranged between the light source and the first diffusion plate.

<19> The measurement apparatus according to any one of <14> to <18>, wherein an illumination pattern of light for illuminating the measurement target object is formed on the second diffusion plate.

<20> The measurement apparatus according to any one of <14> to <19>, wherein when a distance between the first diffusion plate and the second diffusion plate is given as L1 and a distance between the second diffusion plate and the measurement target object is given as L2, a relationship of L1 > L2 is satisfied.

<21> The measurement apparatus according to any one of <14> to <20>, wherein when a diffusion angle relative to an orthogonal direction that is orthogonal to the predetermined arrangement direction of the first diffusion plate is given as Ay and a diffusion angle relative to the orthogonal direction of the second diffusion plate is given as By, a relationship of Ay ≥ By is satisfied.

<22> The measurement apparatus according to any one of <14> to <21>, further including:
a defect detecting unit configured to detect a defect of the measurement target object based on the specular reflection light from the measurement target object received by the light receiving unit.

<23> The measurement apparatus according to any one of <14> to <22>, wherein the light source includes the plurality of point light sources emitting red light, the plurality of point light sources emitting green light, and the plurality of point light sources emitting blue light.

<24> The measurement apparatus according to any one of <14> to <23>, wherein the plurality of point light sources include a lens member configured to guide an optical path of emitted light to the measurement target object.

<25> The measurement apparatus according to any one of <14> to <24>, wherein the plurality of point light sources are Light Emitting Diode (LED) elements.

<26> The measurement apparatus according to any one of <14> to <25>, wherein the second diffusion plate is optically isotropic.

<27> The measurement apparatus according to any one of <14> to <26>, wherein the measurement target object is a vehicle body.

<28> A measurement method executed by the measurement apparatus according to any one of <14> to <27>, the measurement method including:

illuminating the measurement target object with light including a plurality of colors; and receiving the specular reflection light from the illuminated measurement target object.

**Claims**

1. A measurement apparatus for measuring a measurement target object conveyed in a conveying direction, the measurement apparatus comprising:

an illuminating unit configured to illuminate the measurement target object; and a light receiving unit configured to receive specular reflection light from the measurement target object illuminated by the illuminating unit, wherein the illuminating unit includes a light source and a first diffusion plate, the light source including a plurality of point light sources, a plurality of the light sources are arranged in a predetermined arrangement direction, the plurality of point light sources are arranged in an orthogonal direction that is orthogonal to the predetermined arrangement direction, and when a diffusion angle relative to the predetermined arrangement direction of the first diffusion plate is given as Ax and a diffusion angle relative to the orthogonal direction is given as Ay, a relationship of Ax < Ay is satisfied.

2. The measurement apparatus according to claim 1, wherein the plurality of point light sources emit light of different wavelengths.

3. The measurement apparatus according to claim 1, wherein the first diffusion plate is arranged between the light source and the measurement target object.

4. The measurement apparatus according to claim 1, further comprising: a second diffusion plate between the first diffusion plate and the measurement target object.

5. The measurement apparatus according to claim 4, wherein the second diffusion plate has an illumination pattern of light illuminating the measurement target object.

6. The measurement apparatus according to claim 4, wherein when a distance between the light source and the first diffusion plate is given as L1 and a distance between the first diffusion plate and the second diffusion plate is given as L2, a relationship of L1 < L2 is satisfied.

7. The measurement apparatus according to claim 5, wherein the illumination pattern formed on the second diffusion plate is a stripe pattern in which bright-dark patterns, in which a brightness of light changes sinusoidally in the predetermined arrangement direction for each wavelength, are combined.

8. The measurement apparatus according to claim 1, further comprising: a defect detecting unit configured to detect a defect of the measurement target object based on the specular reflection light from the measurement target object received by the light receiving unit.

9. The measurement apparatus according to claim 1, wherein the light source includes the plurality of point light sources emitting red light, the plurality of point light sources emitting green light, and the plurality of point light sources emitting blue light.

10. The measurement apparatus according to claim 1, wherein the plurality of point light sources include a lens member configured to guide an optical path of emitted light to the measurement target object.

11. The measurement apparatus according to claim 1, wherein the plurality of point light sources are Light Emitting Diode (LED) elements.

12. The measurement apparatus according to claim 1, wherein the measurement target object is a vehicle body.

13. A measurement method executed by the measurement apparatus according to claim 1, the measurement method comprising:

illuminating the measurement target object with light including a plurality of colors; and receiving the specular reflection light from the illuminated measurement target object.

FIG.1

CONTROL UNIT — 20

RESULT OUTPUT UNIT — 30

OPTICAL UNIT — 10

ENCODER    READER    POSITION SENSOR

21        22        23

CONVEYING DIRECTION

3

2(2P)

EP 4 610 632 A1

# FIG.2

OPTICAL UNIT 10

ILLUMINATION UNIT 11

LIGHT RECEIVING UNIT 12

ILLUMINATION DIRECTION

OPTICAL AXIS DIRECTION

2P

# FIG.3A

CONVEYING
DIRECTION

10

3

2(2P)

# FIG.3B

FIG.4A  FIG.4B  FIG.4C

FIG.5A

FIG.5B

# FIG.5C

# FIG.5D

# FIG.6

# FIG.7A

13

13r 13g 13b 13r 13g 13b 13r 13g 13b

Fb

13R 13G 13B 13R 13G 13B 13R 13G 13B

Fa

# FIG.7B

Iar Iag Iab

Fa

## FIG.7C

Ibr    Ibg    Ibb

Fb

Fa

## FIG.7D

15

$2\pi$

FIG.8A

FIG.8B

# FIG.9

# FIG.10

20

| 101 | 102 | 103 |
| --- | --- | --- |
| CPU | ROM | RAM |

109

| 104 | 105 |
| --- | --- |
| HDD | INPUT/OUTPUT I/F |

# FIG.11

20

CONTROL UNIT

24

DEFECT DETECTING UNIT

ILLUMINATION UNIT11

LIGHT RECEIVING UNIT12

# FIG.12

```
              START

                 │  S101
    ┌────────────▼────────────┐
    │   ILLUMINATE SURFACE OF  │
    │ MEASUREMENT TARGET OBJECT│
    └────────────┬────────────┘
                 │  S102
    ┌────────────▼────────────┐
    │RECEIVE SPECULAR REFLECTION LIGHT FROM│
    │ SURFACE OF MEASUREMENT TARGET OBJECT │
    └────────────┬────────────┘
                 │  S103
    ┌────────────▼────────────┐
    │  GENERATE IMAGE INFORMATION│
    │BASED ON SPECULAR REFLECTION LIGHT│
    └────────────┬────────────┘
                 │  S104
    ┌────────────▼────────────┐
    │ CALCULATE CHARACTERISTIC VALUE│
    │   BASED ON IMAGE INFORMATION  │
    └────────────┬────────────┘
                 │  S105
    ┌────────────▼────────────┐
    │  DETECT DEFECT OF SURFACE OF│
    │  MEASUREMENT TARGET OBJECT  │
    │ACCORDING TO CHARACTERISTIC VALUE│
    └────────────┬────────────┘
                 │
               END
```

# FIG.13

```
START
  │
  ▼                    S201
┌─────────────────────────────┐
│  ACQUIRE IMAGE INFORMATION   │
└─────────────────────────────┘
  │
  ▼                    S202
┌─────────────────────────────┐
│  DECOMPOSITION INTO RGB COLORS │
└─────────────────────────────┘
  │
  ▼                    S203
┌─────────────────────────────┐
│  CALCULATE PHASE INFORMATION │
└─────────────────────────────┘
  │
  ▼                    S204
┌─────────────────────────────┐
│  EDGE EXTRACTION PROCESSING  │
└─────────────────────────────┘
  │
  ▼                    S205
┌─────────────────────────────┐
│  EXTRACT DEFECT CANDIDATE    │
└─────────────────────────────┘
  │
  ▼                    S206
┌─────────────────────────────┐
│  CALCULATE CHARACTERISTIC VALUE │
└─────────────────────────────┘
  │
  ▼                    S207
┌─────────────────────────────┐
│       DETECT DEFECT          │
└─────────────────────────────┘
  │
  ▼
 END
```

Europäisches
Patentamt

European
Patent Office

Office européen
des brevets

# EUROPEAN SEARCH REPORT

Application Number

EP 25 15 7030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 071721 A (NIPPON STEEL CORP) 2 April 2010 (2010-04-02) | 1,3-5,8, 10-12 | INV. G01N21/88 |
| Y | * paragraphs [0015] - [0020]; claims 1,2; figures 1-5 * | 2,9,13 | G01N21/95 |
| X | EP 3 812 747 A1 (KONICA MINOLTA INC [JP]) 28 April 2021 (2021-04-28) | 1,3-5,7, 8,10-12 | ADD. G01N21/84 |
| Y | * paragraphs [0001], [0020] - [0027]; figures 1-4 * | 2,6,9,13 | |
| Y | JP 2012 058091 A (IPRO LLC) 22 March 2012 (2012-03-22) * paragraphs [0031] - [0037]; figures 1-3 * | 2,9,13 | |
| Y | CN 109 856 146 A (SHENZHEN ACAD OF ROBOTICS) 7 June 2019 (2019-06-07) * paragraphs [0054] - [0055]; figures 3-5 * | 2,9,13 | |
| Y | JP 2008 046103 A (SHIMATEC KK) 28 February 2008 (2008-02-28) * paragraph [0054]; claims 1,3,4; figure 12(b) * | 2,6,9,13 | TECHNICAL FIELDS SEARCHED (IPC) G01N |

The present search report has been drawn up for all claims

| Place of search | Date of completion of the search | Examiner |
|---|---|---|
| Munich | 16 June 2025 | Duijs, Eric |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 15 7030

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | | | Publication date | Patent family member(s) | | Publication date |
|---|---|---|---|---|---|---|
| JP 2010071721 | A | | 02-04-2010 | NONE | | |
| EP 3812747 | A1 | | 28-04-2021 | CN | 112334761 A | 05-02-2021 |
| | | | | EP | 3812747 A1 | 28-04-2021 |
| | | | | JP | 7302599 B2 | 04-07-2023 |
| | | | | JP | WO2019244946 A1 | 01-07-2021 |
| | | | | WO | 2019244946 A1 | 26-12-2019 |
| JP 2012058091 | A | | 22-03-2012 | NONE | | |
| CN 109856146 | A | | 07-06-2019 | NONE | | |
| JP 2008046103 | A | | 28-02-2008 | JP | 5323320 B2 | 23-10-2013 |
| | | | | JP | 2008046103 A | 28-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H921620 A